# FASCICULE DE BREVET EUROPEEN

(11) **EP 3 223 352 B1**
(45) Date de publication et mention de la délivrance du brevet: **19.12.2018**
(21) Numéro de dépôt: 17162346.5
(22) Date de dépôt: 22.03.2017
(51) Int. Cl.: H01M 8/0258, H01M 8/0206, H01M 8/0254, H01M 8/0265, H01M 8/0267

(54) **PLAQUE BIPOLAIRE DE CELLULE ÉLECTROCHIMIQUE À TENUE MÉCANIQUE AMELIORÉE**
BIPOLARE PLATTE EINER ELEKTROCHEMISCHEN ZELLE MIT VERBESSERTER MECHANISCHER FESTIGKEIT
BIPOLAR PLATE OF FUEL CELL WITH IMPROVED MECHANICAL STRENGTH

(30) Priorité: 24.03.2016 FR 1652545
(43) Date de publication de la demande: 27.09.2017
(73) Titulaire: COMMISSARIAT À L'ÉNERGIE ATOMIQUE ET AUX ÉNERGIES ALTERNATIVES, 75015 Paris (FR)
(72) Inventeur: POIROT-CROUVEZIER, Jean-Philippe, 38450 Saint Georges de Commiers (FR)
(74) Mandataire: GIE Innovation Competence Group

(56) Documents cités:
- JP-A- 2006 228 580
- JP-A- 2007 200 700
- US-A1- 2005 058 864
- US-A1- 2011 212 385

## Description

### DOMAINE TECHNIQUE

Le domaine de l'invention est celui des réacteurs électrochimiques comportant un empilement de cellules électrochimiques, telles que les piles à combustible et les électrolyseurs, et concerne plus particulièrement les plaques bipolaires, du type à tôles conductrices, situées entre les électrodes de cellules électrochimiques adjacentes.

### ÉTAT DE LA TECHNIQUE ANTÉRIEURE

Un réacteur électrochimique, tel qu'une pile à combustible ou un électrolyseur, comporte habituellement un empilement de cellules électrochimiques dont chacune comprend une anode et une cathode séparées électriquement l'une de l'autre par un électrolyte, les cellules étant le lieu d'une réaction électrochimique entre deux réactifs introduit de manière continue.

D'une manière générale, dans le cas d'une pile à combustible, le combustible (par exemple l'hydrogène) est apporté jusqu'à l'anode alors que le comburant (par exemple l'oxygène) est amené à la cathode. La réaction électrochimique est subdivisée en deux demi-réactions, une réaction d'oxydation et une réaction de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte par exemple contenu dans une membrane polymère, et un conducteur électronique formé par le circuit électrique externe. L'empilement de cellules est ainsi le lieu de la réaction électrochimique : les réactifs doivent y être apportés, les produits et les espèces non réactives doivent en être évacués, tout comme la chaleur produite lors de la réaction.

Les cellules électrochimiques sont habituellement séparées les unes des autres par des plaques bipolaires qui assurent l'interconnexion électrique des cellules. Les plaques bipolaires comportent habituellement une face anodique au niveau de laquelle est formé un circuit de distribution du carburant, et une face cathodique, opposée à la face anodique, au niveau de laquelle est formé un circuit de distribution du comburant. Chaque circuit de distribution prend la forme d'un réseau de canaux agencés par exemple en parallèle ou en présentant des ondulations, ou décalages transversaux, dans le plan (X,Y) de la plaque bipolaire, pour amener l'espèce réactive de manière homogène à l'électrode correspondante. Les plaques bipolaires peuvent également comporter un circuit de refroidissement formé d'un réseau de conduits internes qui assurent l'écoulement d'un fluide caloporteur permettant d'évacuer la chaleur produite localement lors de la réaction par la cellule.

Chaque plaque bipolaire peut être formée de deux tôles électriquement conductrices accolées l'une à l'autre suivant la direction d'empilement des cellules électrochimiques. Elles présentent des reliefs, ou bossages, formant à la fois les canaux des circuits de distribution sur les faces externes des tôles, et les canaux du circuit de refroidissement entre les faces internes des tôles. Les tôles conductrices peuvent être réalisées en métal et les reliefs être formés par emboutissage.

Les plaques bipolaires présentent également une fonction mécanique dans la mesure où elles assurent la transmission d'un effort de serrage au sein de l'empilement de cellules électrochimiques, cet effort mécanique contribuant à améliorer la qualité du contact électrique entre les électrodes et les plaques bipolaires des cellules électrochimiques. Il existe alors un besoin de disposer de plaques bipolaires à tôles conductrices présentant une tenue mécanique améliorée.

Le document US2011/212385 décrit un séparateur de pile à combustible qui comporte deux plaques accolées l'une à l'autre. Chaque plaque présente des projections venant au contact de l'autre plaque, les projections étant agencées mutuellement de manière à former des canaux d'écoulement de gaz réactifs et des canaux d'écoulement d'un fluide de refroidissement.

### EXPOSÉ DE L'INVENTION

L'invention a pour objectif de remédier au moins en partie aux inconvénients de l'art antérieur, et plus particulièrement de proposer une plaque bipolaire de cellule électrochimique à tenue mécanique améliorée. Pour cela, l'objet de l'invention est une plaque bipolaire de cellule électrochimique, comportant une première et une deuxième tôles conductrices, comportant chacune une face interne et une face externe opposée, accolées l'une à l'autre au niveau des faces internes, et comportant chacune des reliefs formant, au niveau des faces externes, des canaux de distribution destinés à distribuer des gaz réactifs.

Les canaux de distribution d'une même tôle conductrice sont séparés deux à deux par une nervure de séparation destinée à être au contact d'une électrode d'une cellule électrochimique, et chaque canal de distribution comporte une paroi de fond reliée aux nervures de séparation adjacentes.

Selon l'invention, au moins un premier canal de distribution de la première tôle conductrice et un deuxième canal de distribution de la deuxième tôle conductrice comportent chacun :
- au moins une portion dite superposée, au niveau de laquelle ils sont superposés l'un à l'autre et en contact mutuel par leur paroi de fond respective, et
- au moins une portion dite de renfort, au niveau de laquelle ils sont en contact, par leur paroi de fond respective, avec une nervure de séparation de la tôle conductrice opposée.

Certains aspects préférés, mais non limitatifs, de cette plaque bipolaire sont les suivants :

Une première portion de renfort du premier canal de distribution peut être juxtaposée transversalement à une deuxième portion de renfort du deuxième canal de distribution, la première portion de renfort étant au contact d'une nervure de séparation qui borde le deuxième canal de distribution, et la deuxième portion de renfort étant au contact d'une nervure de séparation qui borde le premier canal de distribution.

Le premier canal de distribution et/ou le deuxième canal de distribution peuvent comporter chacun, entre une portion superposée et une portion de renfort, une zone au niveau de laquelle il n'est pas en contact avec la tôle conductrice opposée, autorisant ainsi une communication fluidique locale entre des canaux de refroidissement adjacents.

Chacun desdits canaux de distribution peut comporter une pluralité de portions superposées et de portions de renfort, agencées longitudinalement de manière alternée.

Des portions de renfort d'un canal de distribution peuvent être disposées de manière décalée longitudinalement vis-à-vis de portions de renfort d'un canal de distribution adjacent.

Une tôle conductrice peut comporter des canaux de distribution comportant chacun des portions superposées et des portions de renfort, lesdits canaux de distribution présentant un axe longitudinal sensiblement rectiligne ou à ondulations transversales.

La tôle conductrice opposée peut comporter des canaux de distribution comportant chacun des portions superposées et des portions de renfort, dont certains présentent un axe longitudinal sensiblement rectiligne et d'autres présentent un axe longitudinal à ondulations transversales vis-à-vis d'un axe longitudinal rectiligne.

Des canaux de distribution de la première tôle conductrice peuvent présenter un axe longitudinal à ondulations transversales suivant une première direction, et des canaux de distribution de la deuxième tôle conductrice peuvent présenter un axe longitudinal à ondulations transversales suivant une deuxième direction opposée à la première direction.

La première tôle conductrice peut comporter un nombre de canaux de distribution inférieur au nombre de canaux de distribution de la deuxième tôle conductrice, au moins une nervure de séparation de la première tôle conductrice présentant une dimension transversale qui varie longitudinalement.

La deuxième tôle conductrice peut être destinée à contacter une cathode d'une cellule électrochimique alors que la première tôle conductrice peut être destinée à contacter une anode d'une cellule électrochimique adjacente.

Une portion de renfort peut présenter une forme d'excroissance du canal de distribution en direction de la tôle conductrice opposée, ledit canal de distribution présentant une profondeur locale supérieure à une profondeur locale au niveau d'une portion superposée.

L'invention porte également sur une cellule électrochimique, comportant :
- une plaque bipolaire selon l'une quelconque des caractéristiques précédentes ;
- un assemblage membrane/électrodes, dont l'une desdites électrodes est au contact de la première ou la deuxième tôle conductrice de la plaque bipolaire.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
Les figures 1A et 1B sont des vues en coupe transversale qui illustrent de manière schématique une plaque bipolaire selon un premier mode de réalisation, située entre deux assemblages membrane/électrodes, dont les canaux anodiques et cathodiques de distribution présentent des portions superposées (fig.1A) et des portions de renfort (fig.lB) ;
la figure 2 est une vue en perspective et en éclaté d'une partie de la plaque bipolaire selon le premier mode de réalisation ;
les figures 3A à 3G sont des vues en coupe transversale de la partie de plaque bipolaire illustrée sur la figure 2, qui représentent l'alternance des portions superposées et des portions de renfort des canaux anodiques et cathodiques de distribution ;
la figure 4 est une vue en perspective et en éclaté d'une partie de plaque bipolaire selon un deuxième mode de réalisation, où les canaux anodiques de distribution s'étendent suivant un axe longitudinal rectiligne pour certains et suivant un axe longitudinal à ondulations transversales pour d'autres ;
les figures 5A à 5I sont des vues en coupe transversale de la partie de plaque bipolaire illustrée sur la figure 4, qui représentent l'alternance des portions superposées et des portions de renfort des canaux anodiques et cathodiques de distribution ;
la figure 6 est une vue en perspective et en éclaté d'une partie de plaque bipolaire selon un troisième mode de réalisation dans lequel les canaux anodiques de distribution s'étendent suivant un axe longitudinal à ondulations transversales et les canaux cathodiques de distribution s'étendent suivant un axe longitudinal rectiligne ;
les figures 7A à 7Q sont des vues en coupe transversale de la partie de plaque bipolaire illustrée sur la figure 6, qui représentent l'alternance des portions superposées et des portions de renfort des canaux anodiques et cathodiques de distribution.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux.

On décrira différents modes de réalisation et variantes en référence à une pile à combustible, et en particulier à une pile à combustible de type PEM (pour *Proton Exchange Membrane*, en anglais) dont la cathode est alimentée en oxygène et l'anode en hydrogène. L'invention s'applique cependant à tout type de pile à combustible, en particulier à celles fonctionnant à basse température, c'est-à-dire à une température inférieure à 200°C, ainsi qu'aux électrolyseurs électrochimiques.

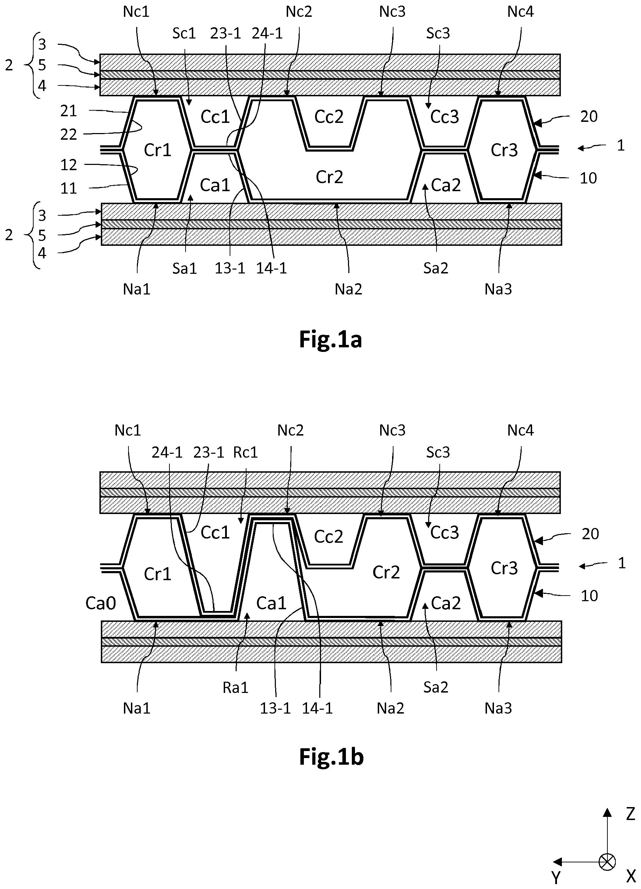

Les figures 1A et 1B illustrent de manière partielle et schématique un exemple de plaque bipolaire 1 de cellule électrochimique selon un premier mode de réalisation. Les cellules électrochimiques appartiennent ici à un empilement de cellules d'une pile à combustible. Chaque cellule électrochimique comporte un assemblage membrane/électrodes 2 formé d'une anode 3 et d'une cathode 4 séparées l'une de l'autre par un électrolyte 5 comprenant ici une membrane polymère. Les assemblages membrane/électrodes 2 des cellules électrochimiques sont disposés entre des plaques bipolaires 1 adaptées à amener des espèces réactives aux électrodes et à évacuer la chaleur produite lors de la réaction électrochimique.

On définit ici et pour la suite de la description un repère orthonormé direct (X,Y,Z) où l'axe Z est orienté suivant l'épaisseur de la plaque bipolaire et donc suivant l'axe l'empilement des cellules électrochimiques, et où les axes X et Y définissent un plan parallèle au plan des plaques bipolaires.

De manière connue en soi, chaque électrode 3, 4 comporte une couche de diffusion (GDL, pour *Gas Diffusion Layer*, en anglais), disposée au contact d'une plaque bipolaire 1, et une couche active située entre la membrane 5 et la couche de diffusion. Les couches actives sont le lieu des réactions électrochimiques. Elles comportent des matériaux permettant les réactions d'oxydation et de réduction aux interfaces respectives de l'anode et la cathode avec la membrane. Les couches de diffusion sont réalisées en matériau poreux autorisant la diffusion des espèces réactives à partir de circuit de distribution des plaques bipolaires 1 jusqu'aux couches actives, ainsi que la diffusion des produits issus de la réaction électrochimique jusqu'au même circuit de distribution.

Chaque plaque bipolaire 1 est formée de deux tôles conductrices 10, 20 accolées et assemblées l'une à l'autre, ces tôles conductrices étant embouties de manière à former des circuits de distribution de gaz réactifs au niveau des électrodes 3, 4 de chacune des cellules électrochimiques, et un circuit de refroidissement situé entre les tôles conductrices 10, 20. Ainsi, une première tôle conductrice 10, dite anodique, est destinée à être au contact de l'anode 3 d'un assemblage membrane/électrodes 2 d'une cellule électrochimique, alors que la deuxième tôle conductrice 20, dite cathodique, est destinée à être au contact de la cathode 4 d'un assemblage membrane/électrodes 2 d'une cellule électrochimique adjacente.

Chaque tôle conductrice 10, 20 comporte une face externe 11, 21 et une face interne 12, 22 opposée, les tôles conductrices 10, 20 étant accolées l'une à l'autre au niveau des faces internes 12, 22. Une face externe 11, 21 est dite anodique lorsqu'elle est destinée à être au contact de l'anode 3 d'une cellule électrochimique, ou cathodique lorsqu'elle est destinée à être au contact de la cathode 4 de la cellule électrochimique adjacente. La face anodique d'une tôle conductrice 10, 20 comporte le circuit de distribution d'un gaz réactif, par exemple de l'hydrogène, et la face cathodique de l'autre tôle conductrice comporte un circuit de distribution d'un gaz réactif, par exemple de l'air ou de l'oxygène.

Les tôles conductrices 10, 20 se présentent sous forme de feuilles, ou de plaques élémentaires de faible épaisseur, réalisées en un matériau électriquement conducteur, par exemple un métal voire un matériau composite par exemple chargé en graphite. L'épaisseur peut être de l'ordre de quelques dizaines de microns à quelques centaines de microns, par exemple de 50µm à 200µm environ dans le cas de tôles métalliques.

Les tôles conductrices comportent des reliefs, ou bossages, obtenus par exemple par emboutissage ou mis en forme sous presse, dont la forme sur une face est le complémentaire de la forme sur la face opposée. Ces reliefs forment, au niveau des faces externes 11, 21, les circuits de distribution de gaz réactifs, et, au niveau des faces internes 12, 22, un circuit de refroidissement comportant des canaux dans lesquels un fluide caloporteur est destiné à s'écouler.

Chaque canal de distribution Ca1, Cc1... est formé de parois latérales 13-1, 23-1... qui s'étendent sensiblement dans l'axe Z de l'épaisseur de la plaque bipolaire 1, ces parois latérales 13-1, 23-1... étant reliées entre elles par une paroi de fond 14-1, 24-1.... Chaque canal de distribution Ca1, Cc1... est séparé des canaux voisins du même circuit de distribution par une paroi dite nervure de séparation Nal, Ncl..., qui relie les parois latérales adjacentes de deux canaux de distribution adjacents, cette nervure de séparation étant destinée à venir au contact de l'électrode correspondante. En d'autres termes, les canaux anodiques Ca1, Ca2..., resp. cathodiques Cc1, Cc2..., de distribution sont séparés deux à deux par une nervure anodique Na1, Na2..., resp. cathodique Nc1, Nc2..., de séparation. La nervure de séparation est une paroi dont la surface est de préférence sensiblement plane.

On peut définir une profondeur locale de canal de distribution comme étant la dimension suivant l'axe Z entre la paroi de fond du canal et un plan passant par les nervures de séparation adjacentes. On peut également définir une largeur locale de nervure de séparation comme étant la dimension de la nervure dans une section transversale. Par ailleurs, par adjacent, ou adjacent transversalement, on entend juxtaposé suivant un axe transversal à l'axe longitudinal d'un canal de distribution.

Selon l'invention, au moins un premier canal de distribution de la première tôle conductrice et un deuxième canal de distribution de la deuxième tôle conductrice comportent chacun :
- au moins une portion dite superposée, au niveau de laquelle ils sont superposés l'un à l'autre et en contact mutuel par leur paroi de fond respective, et
- au moins une portion dite de renfort, au niveau de laquelle ils sont en contact, par leur paroi de fond respective, avec une nervure de séparation de la tôle conductrice opposée.

Comme l'illustre la figure 1A qui représente une première section transversale de la plaque bipolaire 1, au moins un canal anodique Ca1 de distribution et un canal cathodique Cc1 de distribution sont superposés l'un à l'autre et en contact mutuel par leur paroi de fond 14-1, 24-1 respective, ceci au niveau d'une portion dite portion superposée Sa1, Sc1 respective. Par portion superposée, on entend que le canal de distribution considéré est placé en regard ou au droit, c'est-à-dire à la perpendiculaire, d'un canal de distribution de la tôle conductrice opposée, suivant l'axe Z d'épaisseur de la plaque bipolaire 1. Dans cette configuration, chaque canal de distribution Ca1, Cc1 présente, dans sa portion superposée Sal, Scl, une profondeur dite nominale.

Dans cet exemple, tous les canaux cathodiques ne sont pas superposés et en contact avec des canaux anodiques. C'est le cas ici du canal cathodique Cc2, situé entre les canaux cathodiques Cc1 et Cc3, qui n'est pas superposé à un canal anodique. Cette absence de canaux anodiques en regard de certains canaux cathodiques se traduit par la présence de nervures de séparation anodiques de différentes largeurs. Ainsi, les nervures anodiques Na1 et Na3 sont dites étroites et présentent une première largeur, dans la mesure où elles séparent chacune des canaux anodiques dont la portion superposée est en contact avec des canaux cathodiques adjacents. En revanche, la nervure anodique Na2 est dite large et présente une seconde largeur supérieure à la première largeur, dans la mesure où elle sépare deux canaux anodiques Ca1, Ca2 à portions superposées en contact avec des canaux cathodiques non adjacents Cc1, Cc3, c'est-à-dire non juxtaposés transversalement. Ainsi, la largeur de la nervure anodique large Na2 est sensiblement égale à la somme des largeurs des nervures cathodiques Nc2 et Nc3 et de la largeur du canal cathodique Cc2.

Cette configuration est avantageuse dans la mesure où le canal de refroidissement Cr2 délimité notamment par la nervure anodique large Na2 présente une grande section d'écoulement, supérieure à celle des canaux de refroidissement Cr1, Cr3 situés au niveau des nervures anodiques étroites Na1, Na3. Cette configuration est dite à écoulement privilégié puisque cette grande section d'écoulement se traduit par une diminution de la perte de charge locale dans le canal de refroidissement Cr2, ce qui contribue à améliorer localement l'écoulement du fluide caloporteur et donc l'évacuation de la chaleur produite par les cellules électrochimiques en fonctionnement.

Comme l'illustre la figure 1B qui représente une deuxième section transversale de la plaque bipolaire 1, les canaux de distribution anodique Ca1 et cathodique Cc1 comportent en outre une portion de renfort Ra1, Rc1, distincte de la portion superposée Sa1, Sc1, au niveau de laquelle ils sont chacun en contact, par leur paroi de fond 14-1, 24-1 respective, avec une nervure de séparation de la tôle conductrice opposée, ici les nervures Na1 et Nc2.

Dans cet exemple, le canal anodique Ca1 est en contact, au niveau de la paroi de fond 14-1 de la portion de renfort Ra1, avec une nervure de séparation cathodique, ici la nervure Nc2 située entre les canaux cathodiques Cc1 et Cc2. Il est ainsi décalé de manière transversale par rapport à l'axe longitudinal du canal cathodique Cc1, pour être en regard et au contact de la nervure cathodique Nc2. De même, le canal cathodique Cc1 est en contact, au niveau de la paroi de fond 24-1 de la portion de renfort Rc1, avec une nervure de séparation anodique, ici la nervure Na1 située entre les canaux anodiques Ca0, Ca1.

Les portions de renfort Ra1, Rc1 se présentent comme une excroissance du canal en direction de la tôle conductrice opposée pour venir au contact d'une nervure de séparation. Les canaux de distribution présentent alors une profondeur locale maximale.

De préférence, les portions de renfort Ra1, Rc1 des canaux anodique Ca1 et cathodique Cc1 sont adjacentes l'une de l'autre, c'est-à-dire directement voisines, ou juxtaposées, l'une de l'autre suivant une direction transversale. Dans cette situation, une paroi latérale 13-1 de la portion de renfort anodique Ra1 est située de manière adjacente, avec éventuellement contact mécanique, d'une paroi latérale 23-1 de la portion de renfort cathodique Rc1. En d'autres termes, une portion de renfort Ra1 du canal anodique Ca1 est adjacente à une portion de renfort Rc1 du canal cathodique Cc1, la portion de renfort anodique Ra1 étant au contact d'une nervure de séparation cathodique Nc2 qui borde le canal cathodique de distribution Cc1, et la portion de renfort cathodique Rc1 étant au contact d'une nervure de séparation Na1 qui borde le canal anodique de distribution Ca1.

Cette configuration se traduit par un renfort mécanique local de la plaque bipolaire dans la mesure où les parois latérales de chaque portion de renfort assurent ici la transmission des efforts mécaniques de serrage directement d'un assemblage membrane/électrodes d'une cellule à l'assemblage membrane/électrodes de la cellule voisine. A force de serrage constante, il y a donc une diminution des contraintes mécaniques subies par les tôles conductrices par rapport à la configuration de la figure 1A puisque, dans un plan (X,Y), quatre parois latérales transmettent l'effort de serrage au lieu de deux. De plus, la transmission des efforts mécaniques est améliorée dans la mesure où les efforts mécaniques sont directement transmis d'une paroi de fond d'une tôle conductrice à une nervure de séparation de la tôle conductrice opposée. Il est alors possible, à tenue mécanique équivalente, de diminuer l'épaisseur des tôles conductrices, par exemple de 75µm à 50µm, ce qui se traduit par une diminution de l'épaisseur totale de la plaque bipolaire et donc une augmentation de la compacité de l'empilement des cellules électrochimiques.

Il est préférentiel qu'une pluralité de canaux de distribution des circuits de distribution comporte des portions superposées et des portions de renfort disposées de manière alternée suivant l'axe longitudinal des canaux. Par alterner, on entend que les portions superposées et les portions de renfort se succèdent tour à tour, de manière répétée, périodique ou non, suivant l'axe longitudinal du canal.

Ainsi, par le fait que les canaux de distribution anodique et cathodique comportent des portions superposées en contact mutuel dans une première zone et des portions de renfort dans une seconde zone, on améliore ainsi la tenue mécanique de la plaque bipolaire tout en maintenant des zones d'écoulement privilégié. De plus, comme il sera explicité par la suite, l'alternance des portions superposées et des portions de renfort suivant l'axe longitudinal du canal de distribution peut se traduire par une communication fluidique locale entre des canaux de refroidissement adjacents, ce qui autorise un brassage transversal de l'écoulement du fluide caloporteur le long de son axe longitudinal, améliorant ainsi l'évacuation de la chaleur produite par les cellules électrochimiques en fonctionnement.

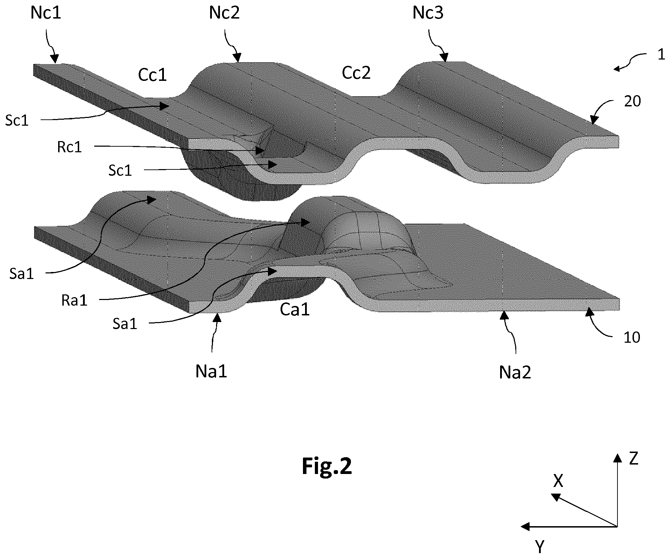

La figure 2 est une vue en perspective et en éclaté d'une partie de plaque bipolaire 1 selon le premier mode de réalisation illustré sur les figures 1A et 1B.

Le canal anodique de distribution Ca1 alterne longitudinalement entre une portion superposée Sa1 où il est superposé et en contact avec la portion superposée Sc1 du canal cathodique de distribution Cc1, et une portion de renfort Ra1 où il est en contact avec une nervure de séparation de la tôle conductrice cathodique 20, ici la nervure cathodique Nc2. Le canal cathodique de distribution Cc1 alterne longitudinalement entre une portion superposée Sc1 qui est superposée et en contact de la portion superposée Sa1 du canal anodique Ca1, et une portion de renfort Rc1 qui est en contact avec une nervure de séparation de la tôle conductrice anodique 10, ici la nervure anodique Na1.

Dans cet exemple, la portion de renfort anodique Ra1 est en contact avec la nervure cathodique Nc2, mais, en variante, elle pourrait être en contact avec une autre nervure cathodique, par exemple la nervure Nc3. De même, la portion de renfort cathodique Rc1 est en contact avec la nervure anodique Nal, mais elle pourrait, en variante, être en contact avec une autre nervure anodique.

Le passage entre les portions superposées Sa1 et les portions de renfort Ra1 s'effectue ici par une ondulation transversale, ou décalage transversal, du canal anodique Ca1 par rapport à un axe principal passant ici par les portions superposées Sa1, cet axe étant ici parallèle à l'axe longitudinal rectiligne du canal cathodique de distribution Cc1 contre lequel les portions superposées Sa1 sont en contact. Par ondulation transversale, on entend que le canal de distribution présente localement un décalage transversal, dans le plan (X,Y), par rapport à un axe principal suivant lequel le canal s'étend.

De manière alternative, le canal anodique Ca1 peut ne pas comporter d'ondulations, et le canal cathodique Cc1 peut alors comporter une ondulation transversale pour que la portion de renfort Rc1 vienne au contact d'une nervure de séparation anodique. En variante, les canaux anodique Ca1 et cathodique Cc1 peuvent comporter des ondulations transversales pour que les portions de renfort respectives Ra1 et Rc1 viennent en regard et au contact d'une nervure de séparation opposée.

Par ailleurs, la longueur des portions superposées et des portions de renfort des canaux de distribution résulte d'une optimisation entre le renforcement mécanique de la plaque bipolaire par la distribution spatiale des portions de renfort d'une part, et la répartition spatiale des sections à écoulement privilégié situées au niveau des portions superposées d'autre part.

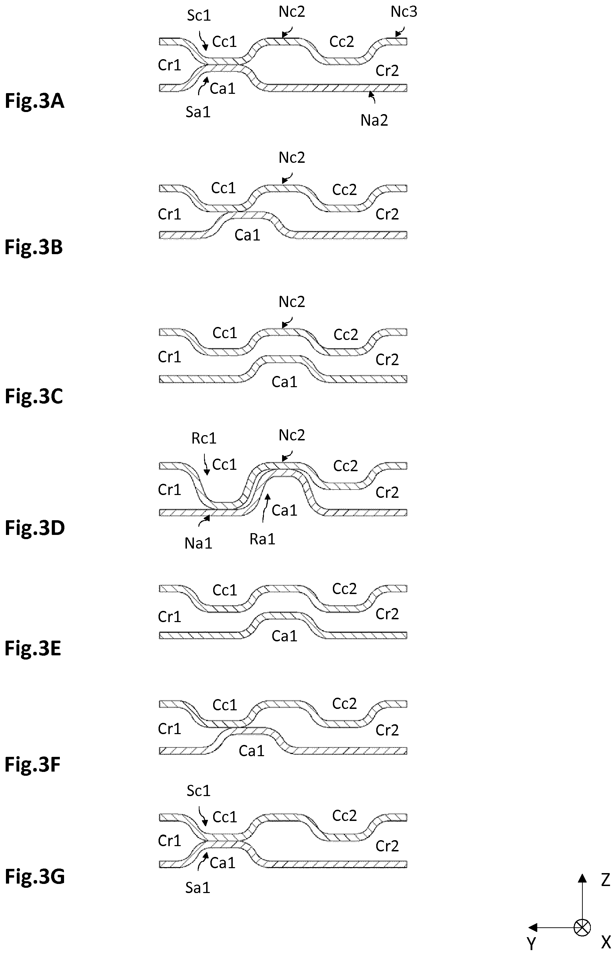

Les figures 3A à 3G sont plusieurs vues en coupe transversale de la plaque bipolaire représentée sur la figure 2, illustrant une alternance entre les portions superposées et les portions de renfort des canaux de distribution.

La figure 3A représente les canaux anodique Ca1 et cathodique Cc1 superposés l'un à l'autre au niveau de leurs portions superposées Sa1 et Sc1 qui sont en contact mutuel au niveau de leur paroi de fond respective. Les canaux Ca1 et Cc1 présentent leur profondeur nominale. La nervure de séparation Na2 présente une largeur supérieure à celles des nervures de séparation Nc2 et Nc3 en regard, dans la mesure où il n'y a pas de canal anodique en regard du canal cathodique Cc2. Le canal de refroidissement Cr2 situé au niveau de la nervure anodique Na2 présente alors une section d'écoulement importante, ce qui se traduit par une perte de charge locale diminuée qui améliore la qualité de l'écoulement et donc de l'évacuation thermique locale. Cette configuration est dite à écoulement privilégié.

Les figures 3B et 3C représentent le canal anodique Ca1 dans une portion intermédiaire qui opère une transition, sous forme d'une ondulation ou décalage transversal, entre la portion superposée Sa1 (fig.3A) et la portion de renfort Ra1 (fig.3D). Dans cette portion intermédiaire, le canal anodique Ca1 se décale transversalement à l'axe longitudinal du canal cathodique Cc1 pour venir progressivement en regard d'une nervure de séparation cathodique, ici la nervure Nc2. Dans cette portion intermédiaire, il présente sa profondeur nominale. Par ailleurs, la portion intermédiaire comporte une zone, illustrée sur la figure 3C, dans laquelle les canaux Ca1 et Cc1 ne sont plus en contact mutuel, ce qui se traduit par une communication fluidique entre les canaux de refroidissement Cr1 et Cr2. Cette communication fluidique se traduit par une forte diminution de la perte de charge locale et autorise un brassage transversal de l'écoulement du fluide caloporteur entre les canaux de refroidissement, ce qui améliore l'homogénéisation de l'évacuation de la chaleur produite par les cellules électrochimiques en fonctionnement.

La figure 3D représente le canal anodique Ca1 au niveau de sa portion de renfort Ra1, c'est-à-dire dans sa portion où la paroi de fond est en contact avec une nervure cathodique opposée, ici la nervure Nc2. Le canal cathodique Cc1 présente également une portion de renfort Rc1 venant au contact direct de la nervure anodique Na1 opposée. Les portions de renfort Ra1, Rc1 se présentent sous la forme d'une excroissance du canal dans la direction de la tôle conductrice opposée, avec une profondeur maximale supérieure à la valeur nominale. Le canal anodique Ca1 n'est alors plus superposé, dans le sens de la direction d'empilement Z, avec le canal cathodique Cc1. Ainsi, par l'appui des canaux de distribution Ca1 et Cc1 directement sur une nervure de séparation opposée, les contraintes mécaniques subies par la plaque bipolaire sont localement diminuées et la transmission des efforts est améliorée, ce qui contribue à renforcer la tenue mécanique de la plaque bipolaire.

Les figures 3E et 3F représentent le canal anodique Ca1 dans la portion intermédiaire qui opère une transition, ici sous forme d'une ondulation ou décalage transversal, entre la portion de renfort Ra1 (fig.3D) et la portion superposée Sa1 aval (fig.3G). Cette portion est ainsi similaire à celle représentée sur les figures 3B et 3C. Le canal anodique Ca1 se décale transversalement à l'axe longitudinal du canal cathodique Cc1 pour venir progressivement en regard d'un canal cathodique, ici le canal Cc1. Dans cette portion intermédiaire, il présente à nouveau sa profondeur nominale tout comme le canal cathodique Cc1. La portion intermédiaire comporte ici également une zone, illustrée sur la figure 3E, dans laquelle les canaux Ca1 et Cc1 ne sont plus en contact mutuel, ce qui se traduit par une communication fluidique entre les canaux de refroidissement Cr1 et Cr2 qui autorise un brassage de l'écoulement entre ces canaux de refroidissement et se traduit par une diminution de la perte de charge locale, ce qui améliore l'homogénéisation de l'évacuation de chaleur par le fluide caloporteur.

La figure 3G représente le canal anodique Ca1 au niveau d'une nouvelle portion superposée Sa1 dans laquelle il est superposé et au contact du canal cathodique Cc1 dans sa portion superposée Sc1. Cette configuration est ici identique à celle illustrée sur la figure 3A.

De manière avantageuse, une pluralité des canaux de distribution alterne longitudinalement entre des portions superposées et des portions de renfort. Cette alternance peut être périodique ou non, et les longueurs des portions de renfort et des portions superposées peuvent être identiques ou non, en fonction de la répartition des contraintes mécaniques désirée et de la répartition des zones à faible perte de charge locale au sein des circuits de distribution et du circuit de refroidissement.

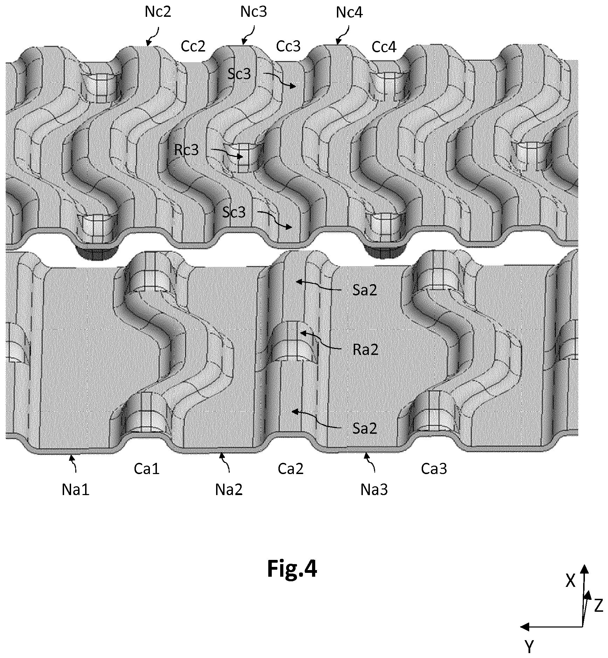

La figure 4 est une vue en éclaté et en perspective d'une partie de plaque bipolaire 1 selon un deuxième mode de réalisation. Ce mode de réalisation se distingue essentiellement du premier mode de réalisation en ce que les canaux de distribution cathodiques s'étendent suivant un axe longitudinal à ondulations transversales, et en ce que les canaux de distribution anodiques s'étendent pour certains suivant un axe longitudinal rectiligne et pour d'autres suivant un axe longitudinal à ondulations transversales.

Le canal anodique Ca2 comporte ici une alternance longitudinale entre des portions superposées Sa2 et des portions de renfort Ra2, ici suivant un axe sensiblement rectiligne. Les portions superposées Sa2 sont superposées et en contact avec le canal cathodique Cc3 opposé au niveau de ses portions superposées Sc3 ; et les portions de renfort Ra2 sont en contact avec une nervure de séparation cathodique, ici la nervure Nc4.

De plus, les canaux anodiques Ca1 et Ca3 adjacents au canal Ca2 comportent ici des ondulations transversales, c'est-à-dire des décalages transversaux ici suivant la direction - Y, entre deux portions de renfort successives. Ainsi, les nervures de séparation se situant entre les canaux ondulants et les canaux rectilignes, par exemple les nervures anodiques Na2 et Na3, présentent une largeur qui varie longitudinalement entre une valeur minimale et une valeur maximale.

Le canal cathodique Cc3 comporte également une alternance entre des portions superposées Sc3 et des portions de renfort Rc3, ici suivant un axe longitudinal qui ondule par rapport à l'axe longitudinal rectiligne du canal Ca2. Les portions superposées Sc3 sont en contact avec le canal anodique Ca2 opposé au niveau de la paroi de fond de ce dernier, et les portions de renfort Rc3 sont en contact avec une nervure anodique, ici la nervure Na2.

Par ailleurs, les canaux de distribution cathodiques présentent ici tous des ondulations transversales parallèles entre elles. Ainsi, dans la mesure où les canaux cathodiques sont ici ondulants et parallèles entre eux, les nervures de séparation cathodiques présentent une largeur sensiblement constante suivant l'axe longitudinal. Dans cet exemple, les ondulations des canaux cathodiques sont réalisées suivant une direction +Y, en opposition de phase avec les ondulations suivant la direction -Y des canaux anodiques ondulants. Comme explicité plus loin, ces ondulations des canaux cathodiques et de certains canaux anodiques se traduisent par la formation de zones localisées où les tôles conductrices ne sont pas en contact mutuel, ce qui se traduit par la communication fluidique entre ces canaux de refroidissement et donc le brassage du fluide caloporteur, ainsi que par une diminution de la perte de charge locale, ce qui améliore l'homogénéisation de l'évacuation de chaleur par le fluide caloporteur.

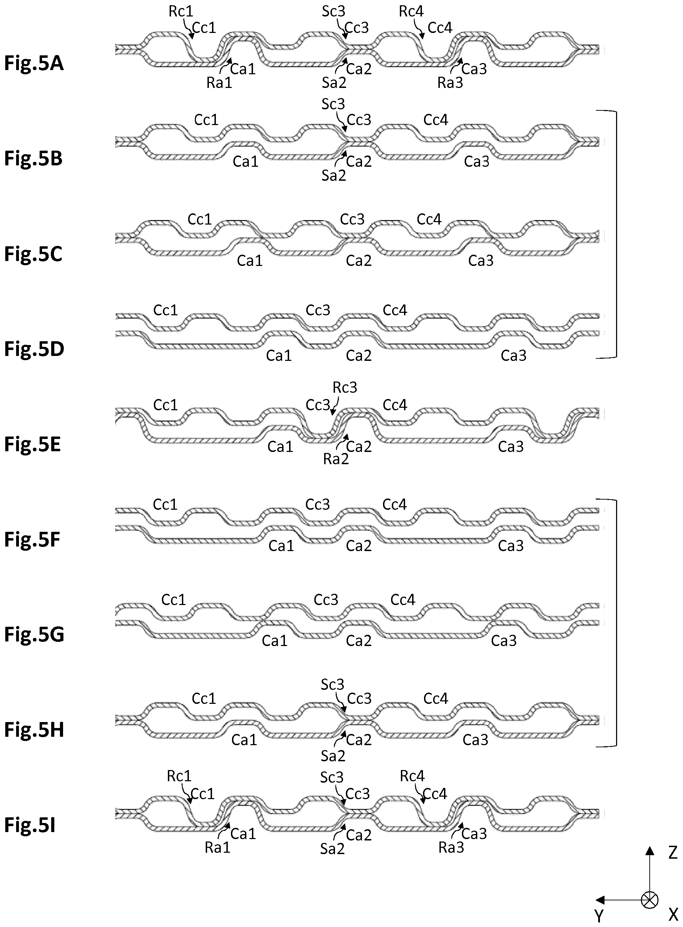

Les figures 5A à 5I sont des vues en coupe transversale de la partie de plaque bipolaire illustrée sur la figure 4, qui représentent une séquence d'alternance entre des portions superposées et des portions de renfort de canaux de distribution.

La figure 5A illustre une section transversale dans laquelle le canal anodique Ca2 présente une portion superposée Sa2 en contact avec la portion superposée Sc3 du canal cathodique Cc3, c'est-à-dire que la paroi de fond du canal anodique Ca2 est superposée et en contact avec la paroi de fond du canal cathodique Cc3. Par ailleurs, le canal anodique Ca2 est voisin de deux canaux Ca1 et Ca3 qui présentent ici des portions de renfort Ra1 et Ra3, c'est-à-dire que la paroi de fond de ces canaux Ca1, Ca3 est en contact, respectivement, avec une nervure de séparation cathodique opposée. De plus, des canaux cathodiques, ici les canaux Cc1 et Cc4, présentent également des portions de renfort Rc1 et Rc4, c'est-à-dire que la paroi de fond de ces canaux Cc1, Cc4 est en contact, respectivement, avec une nervure de séparation anodique opposée.

Les figures 5B, 5C et 5D illustrent une séquence d'ondulation dans laquelle les canaux Ca2 et Cc3 passent de leur portion superposée Sa2 et Sc3 (fig.5A) à leur portion de renfort Ra2 et Rc3 (fig.5E). Ainsi, la figure 5B montre la diminution de la profondeur des canaux anodiques Ca1, Ca3 et des canaux cathodiques Cc1, Cc4, d'une valeur maximale à une valeur nominale. Puis les figures 5C et 5D montrent l'ondulation transversale des canaux cathodiques dans la direction +Y, et de certains canaux anodiques dans la direction -Y opposée. Ainsi, le canal anodique Ca2 reste rectiligne alors que le canal cathodique opposé Cc3 se décale transversalement suivant la direction +Y. De plus, les canaux anodiques Ca1 et Ca3 se décalent transversalement suivant la direction -Y alors que tous les canaux cathodiques se décalent transversalement suivant la direction +Y. L'ondulation se termine lorsque le canal anodique Ca2 est en regard de la nervure cathodique Nc4 et le canal cathodique Cc3 en regard de la nervure anodique Na2.

Durant cette séquence d'ondulation, les canaux anodiques et cathodiques présentent des zones dans lesquelles les tôles conductrices ne sont localement plus en contact mutuel, ce qui autorise une communication fluidique entre des canaux de refroidissement. C'est le cas sur la figure 5B où la diminution de la profondeur des canaux anodiques Ca1 et Ca3 et des canaux cathodiques Cc1 et Cc4 autorise une communication fluidique entre les canaux de refroidissement Cr1 et Cr2 d'une part, et entre les canaux de refroidissement Cr3 et Cr4 d'autre part. C'est le cas également sur la figure 5D où l'ondulation transversale provoque localement la communication fluidique entre tous les canaux de refroidissement Cr1, Cr2, Cr3, Cr4. Ces communications fluidiques entre les canaux de refroidissement se traduisent par une diminution de la perte de charge locale, et autorisent un brassage du fluide caloporteur, ce qui se traduit par une homogénéisation de l'évacuation de chaleur produite par les cellules électrochimiques en fonctionnement.

La figure 5E illustre une section transversale où le canal anodique Ca2 présente une portion de renfort Ra2, et où le canal cathodique Cc3 présente également une portion de renfort Rc3. Ainsi, la paroi de fond des canaux Ca2, Cc3 est en contact, respectivement, avec la nervure de séparation Nc4, Na2. Dans cet exemple, les canaux anodiques Ca1, Ca3 présentent leur profondeur nominale, mais ils pourraient alternativement présenter une portion de renfort. C'est le cas également des canaux cathodiques Cc1, Cc2, Cc4, Cc5.

Les figures 5F, 5G et 5H illustrent une autre séquence d'ondulation dans laquelle le canal anodique Ca2 et le canal cathodique Cc3 passent de leur portion de renfort Ra2, Rc3 (fig.5E) à leur portion superposée Sa2, Sc3 (fig.5I). Il y a ainsi une phase de diminution de la profondeur des canaux (fig.5F), ce qui se traduit par la mise en communication fluidique des canaux de refroidissement, puis une phase d'ondulation transversale (fig.5G et 5H) suivant la direction -Y pour les canaux cathodiques et suivant la direction opposée +Y pour les canaux anodiques Ca1, Ca3, jusqu'à ce que les canaux Ca2 et Cc3 soient superposés l'un contre l'autre dans leur portion superposée respective Sa2, Sc3.

La figure 5I illustre une section transversale dans laquelle les canaux Ca2 et Cc3 sont superposés et en contact mutuel au niveau de leur portion superposée respective Sa2, Sc3 ; et dans laquelle les canaux anodiques Ca1, Ca3 ainsi que les canaux cathodiques Cc1 présentent une portion de renfort. Cette section est identique à celle de la figure 5A et n'est pas détaillée davantage.

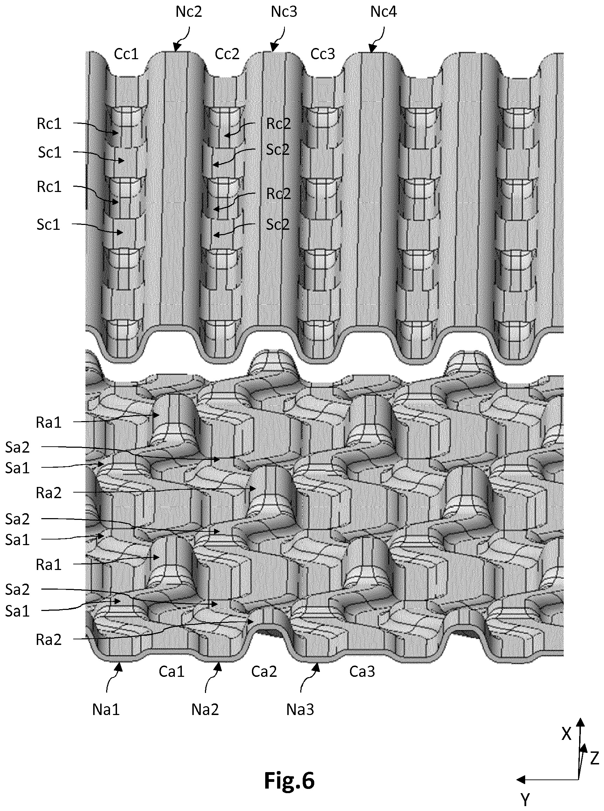

La figure 6 est une vue en éclaté et en perspective d'une partie de plaque bipolaire selon un troisième mode de réalisation. Dans cet exemple, le nombre de canaux anodiques de distribution est sensiblement égal au nombre de canaux cathodiques de distribution. Les nervures de séparation anodiques et cathodiques présentent une largeur sensiblement égale les unes avec les autres, cette largeur étant sensiblement constante suivant l'axe longitudinal des canaux.

Les canaux cathodiques Cc1, Cc2... présentent ici chacun une alternance de portions superposées Scl, Sc2... et de portions de renfort Rc1, Rc2... suivant un axe longitudinal sensiblement rectiligne. Les portions superposées Sc1, Sc2... sont ainsi en contact avec des portions superposées Sa1, Sa2... des canaux anodiques opposés Ca1, Ca2.... Les portions de renfort Rc1, Rc2... sont en contact avec les nervures de séparation anodiques opposées Na1, Na2....

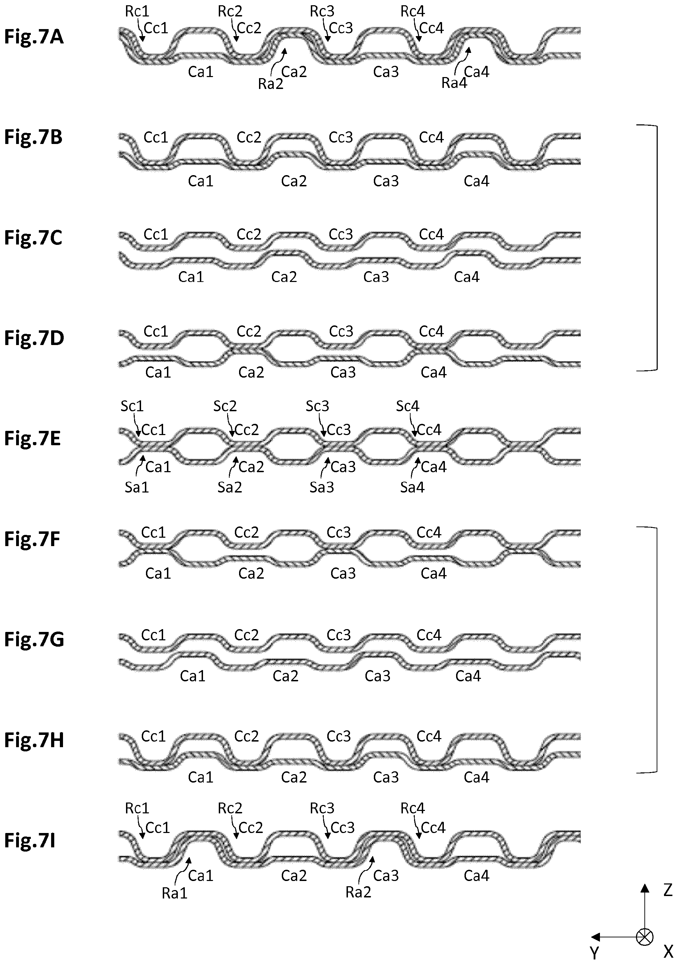

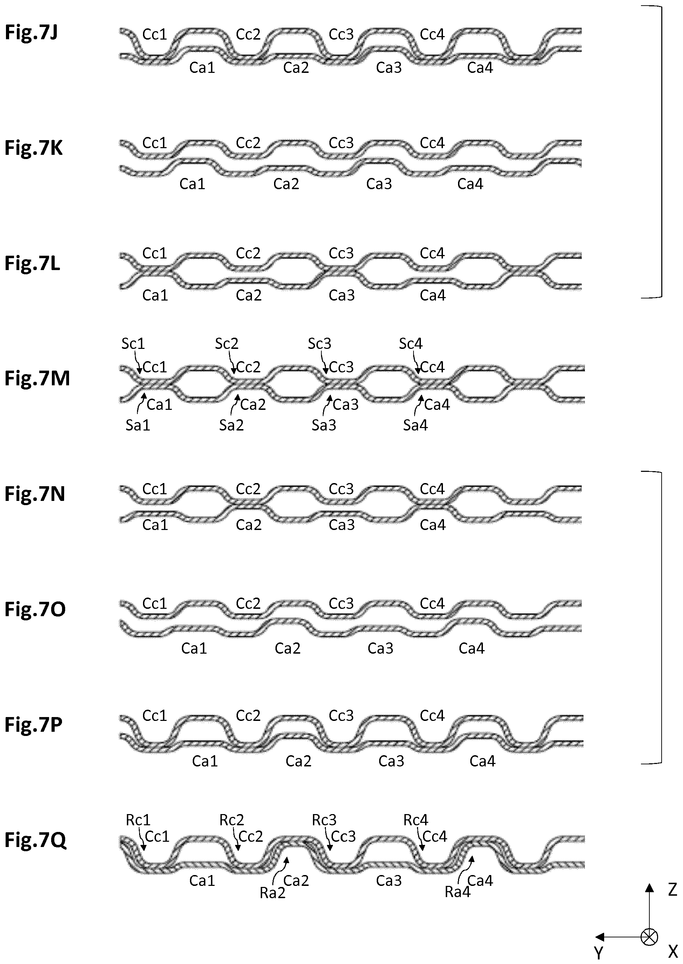

Les canaux anodiques Ca1, Ca2... présentent ici chacun une alternance de portions superposées Sa1, Sa2... et de portions de renfort Ra1, Ra2... suivant un axe longitudinal qui présente des ondulations transversales, ici parallèles entre elles. Cependant, pour permettre l'écoulement du fluide caloporteur entre les tôles conductrices, les portions de renfort des canaux anodiques voisins sont décalées longitudinalement deux à deux. Ainsi, lorsqu'un canal anodique présente une portion de renfort, les canaux anodiques adjacents présentent une profondeur inférieure à la profondeur maximale, pour ainsi former un canal de refroidissement entre les deux tôles conductrices. Dans cet exemple, les portions de renfort de deux canaux anodiques voisins présentent un décalage longitudinal d'une demi-période d'ondulation. Cet agencement augmente ainsi le brassage d'écoulement du fluide caloporteur, comme il est explicité en référence aux figures 7A à 7Q.

Les figures 7A à 7Q sont des vues en coupe transversale de la partie de plaque bipolaire illustrée sur la figure 6, qui représentent une séquence d'alternance entre des portions superposées et des portions de renfort.

La figure 7A illustre une section transversale à portions de renfort selon une première configuration de renforcement mécanique, dans laquelle les canaux cathodiques présentent tous des portions de renfort d'une part, et dans laquelle un premier ensemble de canaux anodiques présente des portions de renfort alors qu'un deuxième ensemble de canaux anodiques ne présentent pas de portions de renfort. Les canaux cathodiques Cc1, Cc2... comportent ainsi des portions de renfort Rc1, Rc2... de sorte qu'il y a contact entre la paroi de fond de chaque canal cathodique avec une nervure de séparation anodique opposée Na1, Na2.... Un canal anodique sur deux comporte ici une portion de renfort. Ainsi, les canaux anodiques Ca2, Ca4 comportent des portions de renfort Ra2, Ra4 et présentent ainsi une profondeur maximale pour venir au contact des nervures cathodiques opposées. En revanche, les canaux anodiques Ca1, Ca3 ne comportent pas de portion de renfort et présentent une profondeur minimale pour former ainsi des canaux de refroidissement avec les nervures cathodiques opposées.

La figure 7E illustre une section transversale intermédiaire à portions superposées selon une configuration d'écoulement privilégié, où les canaux anodiques et cathodiques présentent des portions superposées. Elle est située entre les sections à portions de renfort des figures 7A, 7I et 7Q. Dans cette section, les canaux cathodiques Cc1, Cc2... présentent chacun une portion Sc1, Sc2... superposée et au contact d'une portion superposée Sal, Sa2... des canaux anodiques Ca1, Ca2....

La figure 7I illustre une section transversale à portions de renfort selon une deuxième configuration de renforcement mécanique, dans laquelle les canaux cathodiques présentent des portions de renfort, et dans laquelle le premier ensemble de canaux anodiques ne présente pas des portions de renfort alors que le deuxième ensemble de canaux anodiques en présente. Elle correspond à une demi-période d'ondulation entre les portions de renfort des canaux anodiques. Les canaux cathodiques présentent une configuration identique à celle des figures 7A et 7Q. Par ailleurs, les canaux anodiques Ca2, Ca4 du premier ensemble ne comportent pas de portion de renfort et présentent une profondeur minimale pour ainsi former des canaux de refroidissement avec les nervures cathodiques opposées. En revanche, les canaux anodiques Ca1, Ca3 du deuxième ensemble comportent des portions de renfort Ra1, Ra3 et présentent ainsi une profondeur maximale pour venir au contact des nervures cathodiques opposées.

La figure 7M illustre une section transversale à portions superposées, similaire à celle de la fig.7E, où les canaux anodiques et cathodiques présentent des portions superposées.

Enfin, la figure 7Q illustre une section transversale à portions de renfort identique à celle illustrée en fig.7A. Ces deux sections correspondent à une période d'ondulation entre les portions de renfort des canaux anodiques.

Entre les sections décrites précédemment se situe une séquence d'ondulation transversale dans laquelle les canaux anodiques ondulent transversalement à l'axe longitudinal rectiligne des canaux cathodiques en regard.

Les figures 7B, 7C, 7D illustrent ainsi une séquence d'ondulation transversale entre la figure 7A à portions de renfort selon une première configuration et la figure 7E à portions superposées. Les canaux dont la profondeur était maximale au niveau des portions de renfort diminuent leur profondeur (fig.7B et 7C), puis les canaux anodiques se décalent transversalement, ici suivant la direction +Y, pour venir en regard des canaux cathodiques (fig.7C et 7D), et enfin les canaux anodiques de profondeur minimale augmentent leur profondeur pour venir au contact des canaux cathodiques (fig.7D et 7E). Ainsi, une communication étendue entre les canaux de refroidissement est réalisée dans la section de la fig.7C qui assure un brassage étendu de l'écoulement du fluide caloporteur, puis une communication locale entre canaux de refroidissement adjacents deux à deux est réalisée dans la section de la fig.7D.

Les figures 7F, 7G, 7H illustrent également une séquence d'ondulation transversale entre la figure 7E à portions superposées et la figure 7I à portions de renfort selon la deuxième configuration. Les canaux anodiques du premier ensemble de canaux diminuent leur profondeur de la valeur nominale à une valeur minimale, ce qui assure une communication locale entre les canaux de refroidissement adjacents deux à deux. Puis, les canaux anodiques se décalent transversalement vis-à-vis des canaux cathodiques, ici suivant la direction -Y, pour venir en regard des nervures de séparation cathodiques (fig.7G). Une communication fluidique entre les canaux de refroidissement est réalisée dans cette section de la fig.7G, ce qui assure un brassage étendu de l'écoulement du fluide caloporteur. Enfin, les canaux anodiques du deuxième ensemble de canaux augmentent leur profondeur de la valeur nominale Pₙₒₘ à la valeur maximale Pmax pour former des portions de renfort venant au contact des nervures cathodiques opposées.

Des séquences d'ondulation transversale ont lieu entre les sections des fig.7I et 7M (fig.7J à 7L, similaires à celles des fig.7B à 7D) et entre les sections des fig.7M et 7Q (fig.7N à 7P, similaires à celles des fig.7F à 7H), et ne sont pas décrites plus en détail ici.

Ainsi, la plaque bipolaire présente une tenue mécanique renforcée par la présence des portions de renfort anodiques et cathodiques, tout en présentant des zones d'écoulement privilégié par la présence des portions superposées anodiques et cathodiques. De plus, elle présente des zones de communication fluidique étendue ou locale entre les canaux de refroidissement qui assure un brassage du fluide caloporteur et améliore l'évacuation de la chaleur produite par les cellules électrochimiques en fonctionnement.

Des modes de réalisation particuliers viennent d'être décrits. Différentes variantes et modifications apparaîtront à l'homme du métier.

Ainsi, les ondulations transversales peuvent être non périodiques. De plus, deux portions de renfort successives d'un même canal de distribution peuvent ne pas être en contact de la même nervure de séparation de la tôle conductrice opposée, mais être au contact de nervures de séparation différentes. De même, deux portions superposées successives d'un même canal de distribution peuvent ne pas être en contact avec le même canal de distribution de la tôle conductrice opposée, mais être au contact de canaux de distribution différents.

Ces différentes variantes, combinées ou non entre elles, et appliquées au circuit de distribution anodique et/ou au circuit de distribution cathodique, peuvent permettre d'optimiser à la fois la tenue mécanique de la plaque bipolaire, la distribution spatiale des zones à écoulement privilégié au niveau des portions superposées, ainsi que le brassage de l'écoulement du fluide caloporteur ainsi que du circuit de refroidissement.

## Revendications

1. Plaque bipolaire (1) de cellule électrochimique, comportant une première et une deuxième tôles conductrices (10, 20),
- comportant chacune une face interne (12, 22) et une face externe opposée (11, 21), accolées l'une à l'autre au niveau des faces internes (12, 22), et
- comportant chacune des reliefs formant, au niveau des faces externes (11, 21), des canaux de distribution (Ca, Cc) destinés à distribuer des gaz réactifs,
∘ les canaux de distribution (Ca, Cc) d'une même tôle conductrice (10, 20) étant séparés deux à deux par une nervure de séparation (Na, Nc) destinée à être au contact d'une électrode (3, 4) d'une cellule électrochimique, et
∘ chaque canal de distribution (Ca, Cc) comportant une paroi de fond (14, 24) reliée aux nervures de séparation (Na, Nc) adjacentes,
**caractérisée en ce qu'**au moins un premier canal de distribution (Ca1) de la première tôle conductrice (10) et un deuxième canal de distribution (Cc1) de la deuxième tôle conductrice (20) comportent chacun :
- au moins une portion dite superposée (Sa1, Sc1), au niveau de laquelle ils sont superposés l'un à l'autre et en contact mutuel par leur paroi de fond (14-1, 24-1) respective, et
- au moins une portion dite de renfort (Ra1, Rc1), au niveau de laquelle ils sont en contact, par leur paroi de fond (14-1, 24-1) respective, avec une nervure de séparation (Na1, Nc2) de la tôle conductrice opposée (10, 20).

2. Plaque bipolaire (1) selon la revendication 1, dans laquelle une première portion de renfort (Ra1) du premier canal de distribution (Ca1) est juxtaposée transversalement à une deuxième portion de renfort (Rcl) du deuxième canal de distribution (Cc1), la première portion de renfort (Ra1) étant au contact d'une nervure de séparation (Nc2) qui borde le deuxième canal de distribution (Cc1), et la deuxième portion de renfort (Rcl) étant au contact d'une nervure de séparation (Na1) qui borde le premier canal de distribution (Ca1).

3. Plaque bipolaire (1) selon la revendication 1 ou 2, dans laquelle le premier canal de distribution (Ca1) et/ou le deuxième canal de distribution (Cc1) comportent chacun, entre une portion superposée (Ca1, Cc1) et une portion de renfort (Ra1, Rc1), une zone au niveau de laquelle il n'est pas en contact avec la tôle conductrice opposée (10, 20), autorisant ainsi une communication fluidique locale entre des canaux de refroidissement (Cr1, Cr2) adjacents.

4. Plaque bipolaire (1) selon l'une quelconque des revendications 1 à 3, dans laquelle chacun desdits canaux de distribution (Ca1, Cc1) comporte une pluralité de portions superposées (Sa1, Sc1) et de portions de renfort (Ra1, Rc1), agencées longitudinalement de manière alternée.

5. Plaque bipolaire (1) selon la revendication 4, dans laquelle des portions de renfort (Ra1) d'un canal de distribution (Ca1) sont disposées de manière décalée longitudinalement vis-à-vis de portions de renfort (Ra2) d'un canal de distribution (Ca2) adjacent.

6. Plaque bipolaire (1) selon l'une quelconque des revendications 1 à 5, dans laquelle une tôle conductrice (20) comporte des canaux de distribution (Cc1, Cc2) comportant chacun des portions superposées (Se1, Sc2) et des portions de renfort (Rc1, Rc2), lesdits canaux de distribution (Cc1, Cc2) présentant un axe longitudinal sensiblement rectiligne ou à ondulations transversales.

7. Plaque bipolaire (1) selon la revendication 6, dans laquelle la tôle conductrice (10) opposée comporte des canaux de distribution (Ca1, Ca2) comportant chacun des portions superposées (Sa1, Sa2) et des portions de renfort (Ra1, Ra2), dont certains présentent un axe longitudinal sensiblement rectiligne et d'autres présentent un axe longitudinal à ondulations transversales vis-à-vis d'un axe longitudinal rectiligne.

8. Plaque bipolaire (1) selon la revendication 6 ou 7, dans laquelle des canaux de distribution (Ca1, Ca2) de la première tôle conductrice (10) présentent un axe longitudinal à ondulations transversales suivant une première direction, et des canaux de distribution (Cc1, Cc2) de la deuxième tôle conductrice (20) présentent un axe longitudinal à ondulations transversales suivant une deuxième direction opposée à la première direction.

9. Plaque bipolaire (1) selon l'une quelconque des revendications 1 à 8, dans laquelle la première tôle conductrice (10) comporte un nombre de canaux de distribution (Ca1, Ca2) inférieur au nombre de canaux de distribution (Cc1, Cc2) de la deuxième tôle conductrice (20), au moins une nervure de séparation (Na1, Na2) de la première tôle conductrice (10) présentant une dimension transversale qui varie longitudinalement.

10. Plaque bipolaire (1) selon l'une quelconque des revendications 1 à 9, dans laquelle la deuxième tôle conductrice (20) est destinée à contacter une cathode (4) d'une cellule électrochimique alors que la première tôle conductrice (10) est destinée à contacter une anode (3) d'une cellule électrochimique adjacente.

11. Plaque bipolaire (1) selon l'une quelconque des revendications 1 à 10, dans laquelle une portion de renfort (Ra1, Rc1) présente une forme d'excroissance du canal de distribution (Ca1, Cc1) en direction de la tôle conductrice opposée (10, 20), ledit canal de distribution (Ca1, Cc1) présentant une profondeur locale supérieure à une profondeur locale au niveau d'une portion superposée (Sa1, Sc1).

12. Cellule électrochimique, comportant :
- une plaque bipolaire (1) selon l'une quelconque des revendications précédentes ;
- un assemblage membrane/électrodes (2), dont l'une desdites électrodes (3, 4) est au contact de la première (10) ou la deuxième (20) tôle conductrice de la plaque bipolaire (1).

## Patentansprüche

1. Bipolare Platte (1) einer elektrochemischen Zelle, umfassend ein erstes und ein zweites leitendes Blech (10, 20),
- jeweils umfassend eine Innenseite (12, 22) und eine gegenüberliegende Außenseite (11, 21), die an den Innenseiten (12, 22) aneinandergefügt sind, und
- jeweils umfassend Reliefs, die an den Außenseiten (11, 21) Verteilungskanäle (Ca, Cc) bilden, die dazu bestimmt sind, reaktive Gase zu verteilen,
o wobei die Verteilungskanäle (Ca, Cc) eines selben leitenden Blechs (10, 20) paarweise durch eine Trennungsrippe (Na, Nc) getrennt sind, die dazu bestimmt ist, mit einer der Elektroden (3, 4) einer elektrochemischen Zelle in Kontakt zu stehen, und
o wobei jeder Verteilungskanal (Ca, Cc) eine Bodenwand (14, 24) aufweist, die mit den benachbarten Trennungsrippen (Na, Nc) verbunden ist,
**dadurch gekennzeichnet, dass** mindestens ein erster Verteilungskanal (Ca1) des ersten leitenden Blechs (10) und ein zweiter Verteilungskanal (Cc1) des zweiten leitenden Blechs (20) jeweils Folgendes umfassen:
- mindestens einen übereinander angeordneten Abschnitt (Sa1, Se1), an dem sie übereinander angeordnet sind und durch ihre jeweilige Bodenwand (14-1, 24-1) in gegenseitigem Kontakt stehen, und
- mindestens einen Verstärkungsabschnitt (Ra1, Rc1), an dem sie durch ihre jeweilige Bodenwand (14-1, 24-1) mit einer Trennungsrippe (Nal, Nc2) des gegenüberliegenden leitenden Blechs (10, 20) in Kontakt stehen.

2. Bipolare Platte (1) nach Anspruch 1, wobei ein erster Verstärkungsabschnitt (Ra1) des ersten Verteilungskanals (Ca1) nebeneinander quer zu einem zweiten Verstärkungsabschnitt (Rc1) des zweiten Verteilungskanals (Cc1) angeordnet ist, wobei der erste Verstärkungsabschnitt (Ra1) mit einer Trennungsrippe (Nc2) in Kontakt steht, die an den zweiten Verteilungskanal (Cc1) angrenzt, und wobei der zweite Verstärkungsabschnitt (Rc1) mit einer Trennungsrippe (Na1) in Kontakt steht, die an den ersten Verteilungskanal (Ca1) angrenzt.

3. Bipolare Platte (1) nach Anspruch 1 oder 2, wobei der erste Verteilungskanal (Ca1) und/oder der zweite Verteilungskanal (Cc1) jeweils zwischen einem übereinander angeordneten Abschnitt (Ca1, Cc1) und einem Verstärkungsabschnitt (Ra1, Rc1) einen Bereich umfassen, an dem er nicht mit dem gegenüberliegenden leitenden Blech (10, 20) in Kontakt steht, wodurch eine örtliche Fluidverbindung zwischen benachbarten Kühlkanälen (Cr1, Cr2) gestattet wird.

4. Bipolare Platte (1) nach einem der Ansprüche 1 bis 3, wobei jeder der Verteilungskanäle (Ca1, Cc1) eine Mehrzahl von übereinander angeordneten Abschnitten (Sa1, Sc1) und von Verstärkungsabschnitten (Ra1, Rc1) umfasst, die in Längsrichtung abwechselnd angeordnet sind.

5. Bipolare Platte (1) nach Anspruch 4, wobei Verstärkungsabschnitte (Ra1) eines Verteilungskanals (Ca1) in Längsrichtung versetzt gegenüber von Verstärkungsabschnitten (Ra2) eines benachbarten Verteilungskanals (Ca2) angeordnet sind.

6. Bipolare Platte (1) nach einem der Ansprüche 1 bis 5, wobei ein leitendes Blech (20) Verteilungskanäle (Cc1, Cc2) umfasst, die jeweils übereinander angeordnete Abschnitte (Sc1, Sc2) und Verstärkungsabschnitte (Rc1, Rc2) umfassen, wobei die Verteilungskanäle (Cc1, Cc2) eine Längsachse aufweisen, die im Wesentlichen geradlinig ist oder Querwellen aufweist.

7. Bipolare Platte (1) nach Anspruch 6, wobei das gegenüberliegende leitende Blech (10) Verteilungskanäle (Ca1, Ca2) umfasst, die jeweils übereinander angeordnete Abschnitte (Sa1, Sa2) und Verstärkungsabschnitte (Ra1, Ra2) aufweisen, von denen einige eine im Wesentlichen geradlinige Längsachse aufweisen und andere eine Längsachse mit Querwellen gegenüber einer geradlinigen Längsachse aufweisen.

8. Bipolare Platte (1) nach Anspruch 6 oder 7, wobei Verteilungskanäle (Ca1, Ca2) des ersten leitenden Blechs (10) eine Längsachse mit Querwellen in einer ersten Richtung aufweisen und Verteilungskanäle (Cc1, Cc2) des zweiten leitenden Blechs (20) eine Längsachse mit Querwellen in einer zweiten Richtung, die der ersten Richtung entgegengesetzt ist, aufweisen.

9. Bipolare Platte (1) nach einem der Ansprüche 1 bis 8, wobei das erste leitende Blech (10) eine Anzahl von Verteilungskanälen (Ca1, Ca2) umfasst, die niedriger als die Anzahl von Verteilungskanälen (Cc1, Cc2) des zweiten leitenden Blechs (20) ist, wobei mindestens eine Trennungsrippe (Nal, Na2) des ersten leitenden Blechs (10) eine Querabmessung aufweist, die in Längsrichtung variiert.

10. Bipolare Platte (1) nach einem der Ansprüche 1 bis 9, wobei das zweite leitende Blech (20) dazu bestimmt ist, mit einer Kathode (4) einer elektrochemischen Zelle in Kontakt zu treten, während das erste leitende Blech (10) dazu bestimmt ist, mit einer Anode (3) einer benachbarten elektrochemischen Zelle in Kontakt zu treten.

11. Bipolare Platte (1) nach einem der Ansprüche 1 bis 10, wobei ein Verstärkungsabschnitt (Ra1, Rc1) eine Form eines Vorsprungs des Verteilungskanals (Ca1, Cc1) in Richtung des gegenüberliegenden leitenden Blechs (10, 20) aufweist, wobei der Verteilungskanal (Ca1, Cc1) eine örtliche Tiefe aufweist, die größer als eine örtliche Tiefe an einem übereinander angeordneten Abschnitt (Sa1, Sc1) ist.

12. Elektrochemische Zelle, umfassend:
- eine bipolare Platte (1) nach einem der vorhergehenden Ansprüche;
- eine Membran/Elektroden-Anordnung (2), wovon eine der Elektroden (3, 4) mit dem ersten (10) oder dem zweiten (20) leitenden Blech der bipolaren Platte (1) in Kontakt steht.

## Claims

1. Bipolar plate (1) of an electrochemical cell, including a first conductive sheet and a second conductive sheet (10, 20),
- each including an inner face (12, 22) and an opposite outer face (11, 21), bonded to one another by the inner faces (12, 22), and
- each including reliefs forming, on the outer faces (11, 21), distribution channels (Ca, Cc) that are intended to distribute reactive gases,
∘ the distribution channels (Ca, Cc) of one and the same conductive sheet (10, 20) being separated pairwise by a dividing rib (Na, Nc) intended to make contact with an electrode (3, 4) of an electrochemical cell, and
∘ each distribution channel (Ca, Cc) including a back wall (14, 24) connected to the adjacent dividing ribs (Na, Nc),
**characterized in that** at least one first distribution channel (Ca1) of the first conductive sheet (10) and one second distribution channel (Cc1) of the second conductive sheet (20) each include:
- at least one portion, referred to as a superposed portion (Sa1, Sc1), where they are superposed onto one another and make mutual contact via their respective back walls (14-1, 24-1), and
- at least one portion, referred to as a reinforcement portion (Ra1, Rc1), where they make contact, via their respective back walls (14-1, 24-1), with a dividing rib (Na1, Nc2) of the opposite conductive sheet (10, 20).

2. Bipolar plate (1) according to Claim 1, in which a first reinforcement portion (Ra1) of the first distribution channel (Ca1) is transversally juxtaposed with a second reinforcement portion (Rc1) of the second distribution channel (Cc1), the first reinforcement portion (Ra1) making contact with a dividing rib (Nc2) that borders the second distribution channel (Cc1), and the second reinforcement portion (Rc1) making contact with a dividing rib (Na1) that borders the first distribution channel (Ca1).

3. Bipolar plate (1) according to Claim 1 or 2, in which the first distribution channel (Ca1) and/or the second distribution channel (Cc1) each include, between a superposed portion (Ca1, Cc1) and a reinforcement portion (Ra1, Rc1), a zone where it does not make contact with the opposite conductive sheet (10, 20), thus allowing a local communication of fluid between adjacent cooling channels (Cr1, Cr2).

4. Bipolar plate (1) according to any one of Claims 1 to 3, in which each of said distribution channels (Ca1, Cc1) includes a plurality of superposed portions (Sa1, Sc1) and of reinforcement portions (Ra1, Rc1), which are longitudinally arranged in an alternate manner.

5. Bipolar plate (1) according to Claim 4, in which reinforcement portions (Ra1) of one distribution channel (Ca1) are positioned in a longitudinally offset manner with respect to reinforcement portions (Ra2) of an adjacent distribution channel (Ca2).

6. Bipolar plate (1) according to any one of Claims 1 to 5, in which a conductive sheet (20) includes distribution channels (Cc1, Cc2) each including superposed portions (Sc1, Sc2) and reinforcement portions (Rc1, Rc2), said distribution channels (Cc1, Cc2) having a longitudinal axis that is substantially rectilinear or has transverse undulations.

7. Bipolar plate (1) according to Claim 6, in which the opposite conductive sheet (10) includes distribution channels (Ca1, Ca2) each including superposed portions (Sa1, Sa2) and reinforcement portions (Ra1, Ra2), some of which have a longitudinal axis that is substantially rectilinear and others of which have a longitudinal axis that has transverse undulations with respect to a rectilinear longitudinal axis.

8. Bipolar plate (1) according to Claim 6 or 7, in which distribution channels (Ca1, Ca2) of the first conductive sheet (10) have a longitudinal axis that has transverse undulations in a first direction, and distribution channels (Cc1, Cc2) of the second conductive sheet (20) have a longitudinal axis that has transverse undulations in a second direction, opposite the first direction.

9. Bipolar plate (1) according to any one of Claims 1 to 8, in which the first conductive sheet (10) includes a number of distribution channels (Ca1, Ca2) that is smaller than the number of distribution channels (Cc1, Cc2) of the second conductive sheet (20), at least one dividing rib (Na1, Na2) of the first conductive sheet (10) having a transverse dimension that varies longitudinally.

10. Bipolar plate (1) according to any one of Claims 1 to 9, in which the second conductive sheet (20) is intended to make contact with a cathode (4) of an electrochemical cell while the first conductive sheet (10) is intended to make contact with an anode (3) of an adjacent electrochemical cell.

11. Bipolar plate (1) according to any one of Claims 1 to 10, in which a reinforcement portion (Ra1, Rc1) takes the form of an excrescence of the distribution channel (Ca1, Cc1) in the direction of the opposite conductive sheet (10, 20), said distribution channel (Ca1, Cc1) having a local depth that is deeper than a local depth at a superposed portion (Sa1, Sc1).

12. Electrochemical cell, including:
- a bipolar plate (1) according to any one of the preceding claims;
- a membrane/electrode assembly (2), one of said electrodes (3, 4) of which is in contact with the first (10) or the second (20) conductive sheet of the bipolar plate (1).
